(19) Europäisches Patentamt
European Patent Office
Office européen des brevets

(11) **EP 1 936 900 A1**

(12) **EUROPÄISCHE PATENTANMELDUNG**

(43) Veröffentlichungstag:
**25.06.2008 Patentblatt 2008/26**

(51) Int Cl.:
**H04L 27/26** (2006.01)

(21) Anmeldenummer: **06026229.2**

(22) Anmeldetag: **18.12.2006**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK RS**

(71) Anmelder:
• **Nokia Siemens Networks GmbH & Co. KG
81541 München (DE)**
• **Fraunhofer-Gesellschaft zur
Förderung der angewandten Forschung e.V.
80686 München (DE)**

(72) Erfinder:
• **Forck, Andreas
13587 Berlin (DE)**
• **Gaebler, Holger
14478 Potsdam (DE)**
• **Haustein, Thomas Dr.
81735 München (DE)**
• **Hindelang, Thomas
82256 Fürstenfeldbruck (DE)**

(54) **Verfahren bzw. OFDM-Vorrichtung zur SC-FDMA-Datenübertragung**

(57)    Die Erfindung bezieht sich auf ein Verfahren bzw. eine OFDM-Vorrichtung zur SC-FDMA-Datenübertragung, bei denen eine Abfolge von Eingangsdaten ($x(i)$, $i = 1, 2, 3, ..., N$) mittels einer diskreten Transformation (DFT) als transformierte Datensignale ($y_i$, $i = 1, 2, 3, ..., N$) kodierter und modulierter Datensignale auf erste Frequenzkanäle ($f1, f2, f3, ..., fN$) in einen ersten Frequenzraum auf eine erste Frequenzanzahl (N) transformiert wird, die transformierten Datensignale ($y_i$) auf zweite Frequenzkanäle ($f1*, f2*, f3*, ..., fN*, ..., fNc*$) in einem zweiten Frequenzraum mit einer größeren zweiten Frequenzanzahl (Nc) abgebildet werden, die transformierten Datensignale auf den zweiten Frequenzkanälen mittels einer Rücktransformation (IFFT) rücktransformiert werden und derart rücktransformierte Daten ($z_i$) zur Übertragung bereitgestellt werden. Ausgehend davon werden die transformierten Datensignale ($y_i$) in einen Frequenzbereich ($fi+1*, ..., fi+N*$) der zweiten Frequenzkanäle derart abgebildet, dass ein Gleichanteil ($y1, f1$) der transformierten Datensignale ($y_i$) mittig innerhalb des Frequenzbereichs ($fi+1*, ..., fi+N*$) abgebildet wird.

FIG 1

**Beschreibung**

Die Erfindung bezieht sich auf ein Verfahren zur SC-FDMA-Datenübertragung mit den oberbegrifflichen Merkmalen des Patentanspruchs 1 bzw. auf eine OFDM-Vorrichtung mit einer Steuereinrichtung oder Komponenten, die ausgestaltet und/oder gesteuert sind zum Durchführen eines solchen Verfahrens.

In mobilen Funksystemen, insbesondere in Mobilfunksystemen, sind Übertragungen in Aufwärtsrichtung, das heißt von einer mobilen Station zu einer ortsfesten Basisstation, oftmals durch die Leistung der mobilen Station bzw. eines entsprechenden Terminals beschränkt. Weitere beschränkende Faktoren sind eine zeitliche Dispersion und Interferenz. Tragbare Einrichtungen sollen einen geringst möglichen Leistungsverbrauch haben, dabei aber Daten über Entfernungen von mehreren Kilometern übertragen. Ein Leistungsverstärker in solchen tragbaren Einrichtungen ist diesbezüglich eine problematische Komponente, da die Linearität einer Leistungsverstärkung beide Aspekte, die Verstärkungsdynamik des Kanals und die Leistungsdynamik moderner funkgestützter Übertragungsschemata abdecken muss, welche auf Multi-Code- oder Multi-Carrier-Übertragung basieren (Multi-Carrier/Mehrträger). Eine Kombination von deren physikalischen Schichtressourcen, das heißt Codes oder Subträger, erhöht üblicherweise die Leistungsdynamik, obwohl die elementaren Wellenformen eine konstante Leistung haben, wie dies beispielsweise aus [1] J.-P. Javaudin, C. Dubuc, D. Lacroix, M. Earnshaw, "An OFDM evolution for the UMTS high speed downlink packet access," in Proc. IEEE "http://ieeexplore.ieee.org/xpl/RecentCon.jsp?punumber=9623", Vol. 2, pp. 846-850, 2004, bekannt ist.

Für leistungseffiziente Kommunikation ist eine minimale Leistungsdynamik im Allgemeinen wünschenswert. In dieser Hinsicht kann der Vorhalt (Back-Off) beim Arbeitspunkt des Verstärkers reduziert werden und die Effizienz des Verstärkers kann verbessert werden, wie dies aus [2] J. Tubbax, B. Come, L. Van der Perre, L. Deneire, S. Donnay, M. Engels, "OFDM versus Single Carrier with Cyclic Prefix: A system-based comparison," in Proc. IEEE "http://ieeexplore.ieee.org/xpl/RecentCon.jsp?punumber=7588", Vol. 2, pp. 1115-1119, 2001, bekannt ist. Mit demselben Verstärker können die Terminals eine größere Distanz überbrücken.

Für eine Single-Carrier- bzw. Einzelträger-Übertragung (SC-Transmission) ist bekannt, dass diese eine geringe Leistungsdynamik aufweist. Für eine einfache Entzerrung des Übertragungskanals kann sie mit einer zyklischen Erweiterung (engl.: cyclic extension) kombiniert werden, wie dies aus [3] C. Desset, B. Côme, B. Debaillie, J. Driessche, J. Tubbax, W. Eberle, J.W. Weijers, "Constant Envelope Modulation Techniques for Non-Linear Front-Ends," verfügbar über: "http://www.imec.be/pacwoman/", Deliverables/WP4/WP4.2-IMEC-D4.2.1_constant_enveloppe_technique es-12-01-2004-V1.0.doc und den darin genannten Referenzen bekannt ist. Neuere Informations-Theorie, wie [4] A. Goldsmith, P. Varaiya, "Capacity of fading channels with channel side information," IEEE Trans. Inf. Theory, Vol. 43, No. 6, Nov. 1997, zeigt, dass die Diversität in funkgestützten Kanälen ausgenutzt werden kann, indem die Signale im Spektralbereich mit der besten Übertragungsqualität gesendet werden.

Für die Anwendung der Frequenzbereichs-Resourcenaufteilung auf mehrere Nutzer (engl.: Frequency-Domain-Multi-User-Scheduling) wird die SC-Übertragung momentan in ein Mehrfachzugriffschema weiterentwickelt, welches die Vorteile von sowohl Mehrwege- als auch Mehr-Teilnehmer-Diversität ausnutzt. Folglich wurde SC-FDMA (Single-Carrier-Frequency-Division-Multiple-Access / Einzelträger-Frequenzaufteilungs-Mehrfachzugriff) in [5] 3GPP TR 25.814 V7.0.0 (2006-06), verfügbar über: "http://www.3gpp.org", für Übertragungen in Aufwärtsrichtung in der langfristigen Weiterentwicklung der zellularen Zugangsnetze(engl.: Long Term Evolution) im 3rd Generation Partnership Project (3GPP) vorgeschlagen.

Allgemein bekannt sind virtuelle Antennenkonzepte gemäß [8] D. Samardzija, P. Wolniansky, J. Ling, "Performance evaluation of the VBLAST algorithm in W-CDMA systems," in Proc. IEEE Vehicular Technology Conference, "http://ieeexplore.ieee.org/xpl/RecentCon.jsp?punumber=7588", Vol. 2, pp. 723-727, 2001, wobei sie nachfolgend sinngemäß zur korrekten Detektion der SC-FDMA Signale benutzt werden.

Ein beispielhafter Algorithmus zur Implementierung einer diskreten Fourier-Transformation unter Verwendung des so genannten Mutual Prime Factor Cyclic Algorithm (MPFCA) ist beispielsweise allgemein bekannt aus [10] S.D. Morgera, "Efficient synthesis and implementation of large discrete Fourier transforms," SIAM Journal Comput., Vol. 9, No. 2, pp. 251-272, 1980.

Weiterhin allgemein bekannt sind verschiedene Aspekte der Datenverarbeitung und Übertragung von Daten aus [6] K. Gentile, "The care and feeding of digital, pulse-shaping filters," verfügbar über: "http://www.rfdesign.com"; [7] H.G. Myung, J. Lim, D. J. Goodman, " Peak-to-average power ratio of single carrier FDMA signals with pulse shaping," Proc. IEEE PIMRC, 11-14 Sep. 2006, Helsinki, Finland und [9] H. Chen, V. Jungnickel, V. Pohl, C. von Helmolt, "A multicode space-frequency RAKE receiver," in: Proc. 38th Asilomar Conference on "http://ieeexplore.ieee.org/xpl/RecentCon.jsp?punumber=9626", Vol. 1, Page(s):672 - 676, 2004.

Somit wird derzeit eine SC-FDMA-Übertragung unter Verwendung einer DFT-Vorcodierungseinheit (DFT: Diskrete Fourier-Transformation) und eines direkten Abbildens des Ergebnisses auf Subträger des nachfolgenden IFFT-Eingangssignals (IFFT: Inverse Fast Fourier Transformation / Inverse schnelle Fourier-Transformation) erwogen. Dies bietet Vorteile zusammen mit spektral effizienten Modulationsformaten, wobei jedoch in Verbindung mit leistungseffizienten Modulations-Schemata die Vorcodierungsverstärkung reduziert oder sogar vernachlässigbar wird.

Die Aufgabe der Erfindung besteht darin, ein Verfahren zur SC-FDMA-Datenübertragung vorzuschlagen, welches eine weniger aufwendige Datenverarbeitung und eine Reduzierung des Leistungsverbrauchs insbesondere mobiler Sendevorrichtungen ermöglicht. Vorgeschlagen werden soll außerdem eine OFDM-Vorrichtung mit einer Steuereinrichtung oder Komponenten, die ausgestaltet und/oder gesteuert sind zum Durchführen eines solchen Verfahrens.

Diese Aufgabe wird gelöst durch das Verfahren zur SC-FDMA-Datenübertragung mit den Merkmalen des Patentanspruchs 1 bzw. eine OFDM-Vorrichtung mit einer Steuereinrichtung oder Komponenten, die ausgestaltet und/oder gesteuert sind zum Durchführen eines solchen Verfahrens. Vorteilhafte Ausgestaltungen sind Gegenstand abhängiger Ansprüche.

Bevorzugt wird demgemäß ein Verfahren zur SC-FDMA-Datenübertragung (SC-FDMA: Single Carrier-Frequency Division Multiple Access / Frequenzaufteilungs-Mehrfachzugriff auf einem Einzelträger), bei dem eine Abfolge von Eingangsdaten mittels einer diskreten Transformation als transformierte Datensignale kodierter und modulierter Datensignale auf erste Frequenzkanäle in einen ersten Frequenzraum auf eine erste Frequenzanzahl transformiert wird, die transformierten Daten bzw. Datensignale auf zweite Frequenzkanäle in einem zweiten Frequenzraum mit einer größeren zweiten Frequenzanzahl abgebildet werden, die transformierten Daten auf den zweiten Frequenzkanälen mittels einer Rücktransformation rücktransformiert werden und derart rücktransformierte Datensignale zur Übertragung bereitgestellt werden. Ausgehend davon werden die transformierten Datensignale in einen Frequenzbereich der zweiten Frequenzkanäle derart abgebildet, dass ein Gleichanteil der transformierten Datensignale mittig innerhalb des zugewiesenen Frequenzbereichs im zweiten Frequenzraum abgebildet wird. Dabei wird unter Abbilden insbesondere eine direkte Übertragung durch Kopieren, ein Verschieben aus einem Speicher in Speicherplätze eines anderen Speichers und optional auch eine Abbildung unter Zuhilfenahme einer Abbildungsmatrize verstanden.

Der Frequenzbereich der zweiten Frequenzkanäle wird bevorzugt durch eine insbesondere direkt aufeinanderfolgende Anzahl der zweiten Frequenzkanäle gleich der ersten Frequenzanzahl der transformierten Datensignale gebildet.

Die transformierten Datensignale werden bevorzugt auf zueinander insbesondere direkt benachbarte Frequenzkanäle der zweiten Frequenzkanäle abgebildet.

Die transformierten Datensignale können zyklisch verschoben abgebildet in den Frequenzbereich der zweiten Frequenzkanäle abgebildet werden. Auf einfache Art und Weise kann dies durch eine Verschiebeoperation innerhalb eines Speichers oder Speicherbereichs durchgeführt werden. Aufwendiger aber trotzdem hinsichtlich des Aufwands noch vorteilhaft ist aber z.B. auch eine Abbildung unter Einsatz z.B. einer Abbildungsmatrize.

Eine erste Hälfte der transformierten Datensignale kann einschließlich des Gleichanteils in dem Frequenzbereich der zweiten Frequenzkanäle einer zweiten Hälfte der transformierten Datensignale nachfolgend abgebildet werden. Dabei wird bevorzugt die erste Hälfte der transformierten Datensignale einschließlich dem Gleichanteil auf die ersten der zweiten Frequenzkanäle und die zweiten Hälfte der transformierten Datensignale auf die letzten der zweiten Frequenzkanäle abgebildet und nachfolgend eine gemeinsame zyklische Verschiebung aller benutzen Frequenzkanäle auf den zugewiesenen Frequenzbereich durchgeführt.

Die transformierten Datensignale werden bevorzugt zur Abbildung in den Frequenzbereich der zweiten Frequenzkanäle derart spektral erweitert, dass im zweiten Frequenzraum Redundanz entsteht. Bevorzugt werden beim Erweitern die transformierten Datensignale als ein erster Block in den Frequenzbereich der zweiten Frequenzkanäle abgebildet und die transformierten Datensignale als ein weiterer Block redundant hinter dem ersten Block in den Frequenzbereich der zweiten Frequenzkanäle abgebildet, wobei der Gleichanteil im Übergangsbereich der beiden Blöcke abgebildet wird. Der Begriff des Erweiterns ist dabei breit zu verstehen, auch im Sinne eines Spreizens, wobei dies nicht auf das aus dem Mobilfunk für sich bekannten Spreizen beschränkt ist. Insbesondere ist darunter auch zu verstehen, dass das Spektrum, in dem die Datensignale gesendet werden, aufgeweitet wird durch eine periodische Wiederverwendung der transformierten Datensignale, so dass im zweiten Frequenzraum eine Redundanz hinzugefügt wird.

Bevorzugt wird im Frequenzbereich eine zusätzliche Filterung durchgeführt.

Bevorzugt wird insbesondere auch ein Verfahren zum Verarbeiten gemäß einem derartigen Verfahren übertragener Daten, bei dem die übertragenen Datensignale mittels einer Transformation in den Frequenzbereich transformiert, mittels umgekehrter Verfahrensweise auf erste Frequenzkanäle eines ersten Frequenzraums auf die erste Frequenzanzahl abgebildet und mittels einer Rücktransformation rücktransformiert werden.

Für die Transformation und die Rücktransformation kann mit Blick auf den geringen Datenverarbeitungsaufwand vorteilhaft eine Fouriertransformation, insbesondere eine diskrete oder schnelle Fouriertransformation verwendet werden.

Die zu übertragenden Daten werden besonders bevorzugt als mittels BPSK oder QPSK modulierte Daten übertragen. Jedoch können auch mit anderen Modulationsverfahren verarbeitete Daten mit einem solchen Verfahren übertragen werden, wobei gemäß erster Untersuchungen insbesondere bei Modulationsverfahren mit konstanter Amplitude ein besonders vorteilhaftes Ergebnis gegenüber bekannten Verfahren erzielbar ist.

Die vorliegende Verfahrensweise bzw. Vorrichtung betrifft somit eine vollständige Sende-Empfangs-Kette für eine SC-FDMA-Übertragung über funkgestützte Mehrwege-Fading-Kanäle in welchen eine zusätzliche spektrale Erweiterung und Kompression verwendet wird wie auch eine spezielle Abbildung von Signalen auf die Subträger in der gewünschten Ressourceneinheit. Dadurch kann im Vergleich zu der im 3GPP erörterten Lösung eine weitere Reduzierung der Leistungsdynamik erzielt werden.

Mit einer solchen Verfahrensweise wird somit ein entscheidendes Problem beim Carrier-Mapping, das heißt Abbilden auf Träger einer Übertragungsressource gelöst. Zwar wird nachteilhaft die Bandbreite, welche zur Übertragung erforderlich ist, geringfügig erhöht, dabei wird jedoch vorteilhaft ermöglicht, dass eine beliebig skalierbare Bandbreite verwendet wird. Ein wesentlicher Vorteil ist eine deutliche Verbesserung des Spitzen-zu-Durchschnittsleistungs-Verhältnisses.

Ein Ausführungsbeispiel wird nachfolgend anhand der Zeichnung näher erläutert. Es zeigen:

Fig. 1    schematische Abbildungen zur Veranschaulichung verschiedener Datenverarbeitungsschritte zur Vorbereitung einer Datenübertragung,

Fig. 2    eine gegenüber Fig. 1 alternative Verfahrensweise,

Fig. 3    eine Abfolge von beispielhaften Komponenten zur Umsetzung einer derartigen Datenverarbeitung mit einer Filterung im Zeitbereich zur Bereitstellung zu übertragender Daten,

Fig. 4    Komponenten einer Empfängereinrichtung zum Empfangen von gemäß Fig. 3 verarbeiteten Daten,

Fig. 5    eine senderseitige Anordnung von Komponenten gemäß einer alternativen Ausführungsform,

Fig. 6    empfängerseitige Komponenten zur Verarbeitung eines gemäß Fig. 5 bereitgestellten Datensignals, und

Fig. 7    Kurven zur Veranschaulichung der Effizienz solcher Verfahrensweisen.

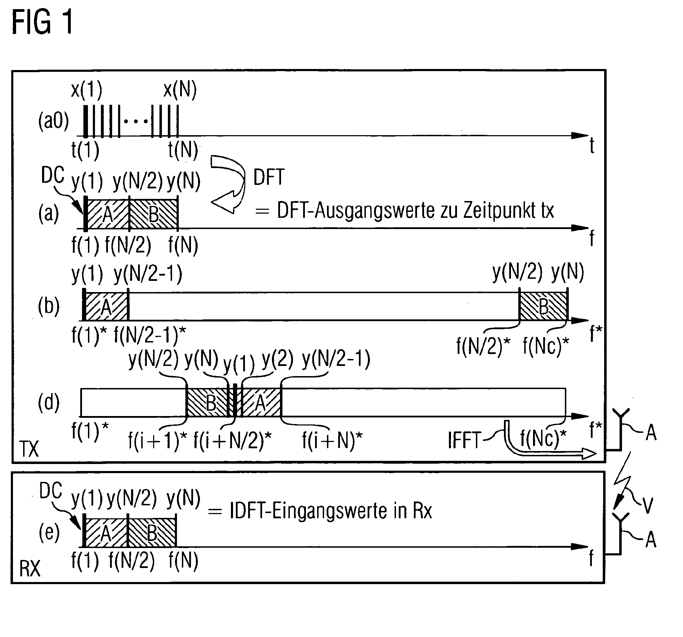

Fig. 1 zeigt eine erste Verfahrensweise zur Verarbeitung von Daten, welche über eine SC-FDMA-Übertragung von einer senderseitigen Einrichtung TX zu einer empfängerseitigen Einrichtung RX übertragen werden. Bei der senderseitigen Einrichtung TX handelt es sich um ein vorzugsweise mobiles Terminal in Art beispielsweise eines Mobilfunkgerätes. Bei der empfängerseitigen Einrichtung RX handelt es sich vorzugsweise um eine ortsfeste Station, insbesondere eine Basisstation eines Mobilfunknetzes. Die Übertragung zwischen der senderseitigen Einrichtung TX und der empfängerseitigen Einrichtung RX erfolgt vorzugsweise, jedoch nicht notwendig, über eine funkgestützte Verbindung bzw. über eine Funkschnittstelle V, welche über jeweils diesen beiden Einrichtungen TX, RX zugeordnete Antennen aufgebaut wird. Sowohl die senderseitige Einrichtung TX als auch die empfängerseitige Einrichtung RX umfassen üblicherweise eine Vielzahl für sich bekannter Komponenten, welche vorzugsweise auch zur Durchführung der beschriebenen bevorzugten Verfahrensweisen ausgestaltbar und/oder programmierbar sind. Insbesondere handelt es sich bei derartigen Komponenten um Speicherelemente, Prozessoren und gegebenenfalls weitere Schaltungselemente.

In einem vorbereitenden Verfahrensschritt a0 wird eine Abfolge von Eingangsdaten $x(i)$, $i = 1, 2, 3, ..., N$ in vorzugsweise zeitlicher Abfolge, das heißt zu diskreten Zeitpunkten $t(1), ..., t(N)$ bereitgestellt, wie dies schematisch über der Zeit t skizziert ist. Dabei handelt es sich um als modulierte und vorzugsweise auch als codierte Datensignalen bereitgestellte Eingangsdaten $x(i)$.

In einem ersten eigentlichen Verfahrensschritt a wird diese Abfolge von diskreten Eingangsdaten $x(1), ..., x(N)$ in einen ersten Frequenzraum auf eine erste Frequenzanzahl N erster Frequenzkanäle $f(1), f(2), f(3), ..., f(N)$ transformiert. Dies erfolgt mittels einer Transformation der Eingangsdaten $x(i)$, wobei für eine solche Transformation der Einsatz einer schnellen oder vorzugsweise einer diskreten Fourier-Transformation DFT bevorzugt wird. Dargestellt ist dies durch einen zusammenhängenden Block über der Frequenz f des ersten Frequenzraums für einen bestimmten Zeitpunkt tx. Im Falle des Einsatzes einer diskreten Fourier-Transformation DFT und insbesondere im Falle des Einsatzes einer schnellen Fourier-Transformation entspricht dabei die Anzahl der ersten Frequenzkanäle $f(1), ..., f(N/2), ..., f(N)$ der Anzahl N der Abfolge von Eingangsdaten $x(1), ..., x(N)$. In für Fourier-Transformationen üblicher Art und Weise entspricht dabei der erste transformierte Datenwert $y(1)$ in dem ersten Frequenzkanal $f(1)$ einem Gleichanteil DC bzw. Gleichspannungsanteil.

In einem zweiten Verfahrensschritt (b) wird der zusammenhängende Block in einen ersten Block A und in einen zweiten Block B untergliedert. Nachfolgend findet eine Abbildung der transformierten Datensignale bzw. Daten $y(i)$ auf zweite Frequenzkanäle $f(1)^*, f(2)^*, ..., f(N)^*, ..., f(Nc)^*$ in einem zweiten Frequenzraum mit einer größeren zweiten Frequenzanzahl Nc als der Frequenzanzahl N des ersten Frequenzraums statt. Die Abbildung erfolgt dabei so, dass die transformierten Datenwerte $y(1), ..., y(N/2-1)$ des ersten Blocks A auf insbesondere direkt zueinander benachbarte Frequenzkanäle $f(1)^*, ..., f(N/2-1)^*$ des zweiten Frequenzraums abgebildet werden und die einander benachbarten transformierten Daten $y(N/2), ..., y(N)$ des zweiten Blocks B auf ebenfalls insbesondere direkt zueinander benachbarte Frequenzkanäle f(N/2)*, ..., f(Nc)* des zweiten Frequenzraums abgebildet werden.

Im Fall der beispielhaften Verfahrensweise gemäß Fig. 1 erfolgt die Abbildung in den zweiten Frequenzraum dabei derart, dass die transformierten Daten y(1), ..., y(N/2-1) des ersten Blocks A auf die entsprechende Anzahl der ersten Frequenzkanäle f(1)*, ..., f(N/2-1)* des zweiten Frequenzraums abgebildet werden und die transformierten Daten y(N/2), ..., y(N) des zweiten Blocks B auf die letzten bzw. höchstwertigen Frequenzkanäle f(N/2)*, ..., f(Nc)* des zweiten Frequenzraums abgebildet werden, wie dies über der Frequenz f* des zweiten Frequenzraums skizziert ist. Durch diese Abbildung liegen die beiden Frequenzblöcke aus Sicht eines Algorithmus zur Durchführung einer insbesondere schnellen Fourier-Transformation oder einer diskreten Fourier-Transformation als ein wieder zusammenhängender Block, wobei die transponierten Daten y(N/2), ..., y(N) des zweiten Blocks B nun vor den transponierten Daten y(1), ..., y(N/2-1) des ersten Blocks A liegen. Insbesondere ist in einem solchen Gesamtblock der Gleichanteil DC bzw. der erste Datenwert y(1) mittig zwischen den übrigen Datenwerten der beiden Blöcke B, A angeordnet bzw. abgebildet.

In einem optionalen dritten Verfahrensschritt (d) erfolgt eine weitere Abbildung der transformierten und auf den zweiten Frequenzbereich umgesetzten Daten y(N/2), ..., y(N), y(1), ... y(N/2-1) in einen für eine nachfolgende Übertragung bevorzugten Frequenzbereich f(i+1)*, ..., f(i+N/2)*, ..., f(i+N)*. Bei diesem Bereich kann es sich beispielsweise um einen Frequenzbereich handeln, welcher auf der zu verwendenden Funkschnittstelle eine im Vergleich zu sonstigen Frequenzbereichen besonders geringe Störung erwarten lässt. Möglich ist auch eine entsprechende Verschiebung in einen speziellen Frequenzbereich, der für die sendende Einrichtung belegt wurde.

Nachfolgend wird eine inverse Fourier-Transformation, insbesondere eine inverse diskrete Fourier-Transformation oder eine inverse schnelle Fourier-Transformation IFFT des zweiten Frequenzraums, das heißt der gesamten Daten über den zweiten Frequenzkanälen f(1)*, ..., f(Nc)*, durchgeführt, um die transformierten und abgebildeten Daten in den Zeitbereich zurückzutransformieren und im Zeitbereich als zu übertragende Signal bzw. Daten bereitzustellen bzw. über die Funkschnittstelle V zu übertragen.

Während eine besonders bevorzugte Verfahrensweise darin besteht, dass im zweiten Schritt eine Abbildung der transponierten Daten y(N/2), ..., y(N) des zweiten Blocks B auf die höherwertigen Frequenzkanäle und nachfolgend eine einfache zyklische Verschiebung der gesamten transformierten Daten in den für die Übertragung gewünschten Frequenzbereich beschrieben wird, ist prinzipiell auch eine direkte Abbildung der in den ersten Frequenzbereich transformierten Daten y(1), ..., y(N) in den gewünschten Frequenzbereich f(i+1)*, ..., f(i+N)* des zweiten Frequenzbereichs möglich. Die spezielle Anordnung mit dem Gleichanteil bzw. dem ersten transponierten Datenwert y(1) in mittiger Position zwischen den übrigen Datenwerten kann dabei optional auch durch Einsatz einer entsprechenden Abbildungsmatrize durchgeführt werden.

In der empfängerseitigen Einrichtung RX werden die derart übertragenen Daten entsprechend zurück transformiert und zurück abgebildet, wozu wiederum eine Fourier-Transformation und nachfolgend eine entsprechende Rückabbildung angewendet wird. Die dadurch transformierten und zurück abgebildeten Daten weisen dann wieder den Gleichanteil DC als ersten Datenwert y(1) über einem ersten Frequenzkanal f(1) im ersten Frequenzraum und einen höchstwertigen Datenwert y(N) über einem entsprechenden Frequenzkanal f(N) im ersten Frequenzraum auf. Natürlich ist davon auszugehen, dass bei dieser Rekonstruktion nicht exakt die gleichen Daten bereitgestellt werden, welche im ersten Verfahrensschritt a senderseitig erzeugt wurden, da auf der Übertragungsstrecke üblicherweise Veränderungen und Verluste im übertragenen Signal auftreten. Ein Teil dieser Veränderungen wird durch die Kanalentzerrung rückgängig gemacht, jedoch verbleibt eine mehr oder weniger starke Veränderung des Rauschens. Ohne Rauschen werden die Sendesignale im zweiten Frequenzbereich jedoch vollständig rekonstruiert bevor der spezielle Detektionsprozess für SC-FDMA angewendet wird. Diese in der empfängerseitigen Einrichtung RX fourier-transformierten, entzerrten und und rückabgebildeten Datensignale bzw. Daten y(1), ..., y(N) werden hierbei als Eingangswerte für eine inverse Fourier-Transformation, beispielsweise eine inverse diskrete Fourier-Transformation IDFT bereitgestellt.

Natürlich kann eine zusätzliche Datenverarbeitung in allen Verfahrensstadien durchgeführt werden. Insbesondere kann eine Datenfilterung im Frequenzbereich vorgenommen werden. Auch sonstige in der Datenverarbeitung von über eine Funkschnittstelle zu übertragenden Daten bekannte Verfahren zur Optimierung des Signals und/oder zur Zuweisung bestimmter Zeitschlitze, Codes und/oder Frequenzen können in für sich bekannter Art und Weise verwendet und mit der anhand der beschriebenen Verfahrensschritte beschriebenen Datenverarbeitung kombiniert angewendet werden.

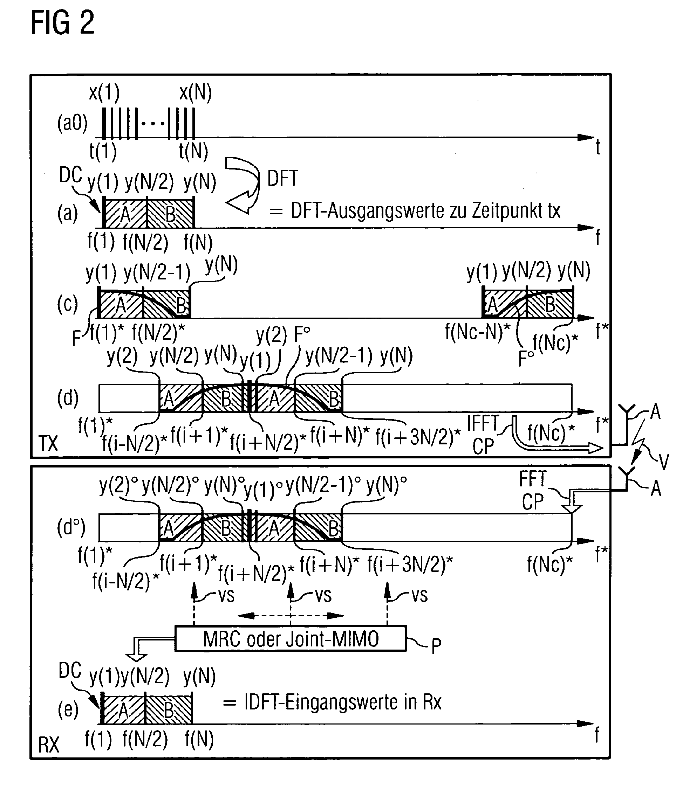

Anhand Fig. 2 ist eine zweite beispielhafte Verfahrensweise beschrieben, wobei nachfolgend lediglich auf Unterschiede der ersten Verfahrensweise eingegangen wird und bezüglich der weiteren Aspekte auf die Ausführungen zu Fig. 1 verwiesen wird.

Gemäß Fig. 2 besteht der dortige zweite Verfahrensschritt c darin, eine Erweiterung der transformierten diskreten Daten y(1), ..., y(N) bei der Abbildung in den zweiten Frequenzraum oder nach dieser Abbildung derart vorzunehmen, dass Redundanz entsteht. Wie dargestellt, werden dazu die transformierten Daten y(1), ..., y(N) vollständig auf die ersten N-Frequenzkanäle f(1)*, ..., f(N/2)* des zweiten Frequenzbereichs gesetzt. Zusätzlich werden die gesamten transformierten Daten y(1), ..., y(N) auf die letzten N-Frequenzkanäle f(Nc-N)*, ..., f(Nc)* des zweiten Frequenzbereichs gesetzt. Dadurch wird wiederum bewirkt, dass der Gleichanteil y(1) mittig zwischen den übrigen transformierten und abgebildeten Daten zu liegen kommt. Vorzugsweise wird bei der Abbildung auf die hinteren N Frequenzkanäle der Gleichanteil DC bzw. y(1) nicht mit übertragen oder durch eine Filterfunktion F˚ ausgefiltert.

Optional können in dem dritten Verfahrensschritt d die gesamten transformierten, abgebildeten und redundanten erweiterten Daten y(2), ..., y(M), y(1), y(2), ..., y(N) wieder in einen für die Übertragung gewünschten Frequenzbereich innerhalb des zweiten Frequenzraums abgebildet, vorzugsweise zyklisch verschoben werden.

Empfängerseitig erfolgt in der empfängerseitigen Einrichtung RX eine Transformation in den Frequenzbereich, so dass in einem entsprechenden empfängerseitigen Verfahrensschritt d˚ abgesehen von Veränderungen durch die eigentliche Übertragung idealerweise die Daten bereitstehen, die nach dem dritten senderseitigen Verarbeitungsschritt d bereitstehen. Aus diesen Daten erfolgt eine Rückabbildung auf die Frequenzanzahl N der ersten Frequenzkanäle f (1), ..., f(N) des ersten Frequenzraums derart, dass der Gleichanteil DC wieder als erster Datenwert y(1) dem ersten Frequenzträger f(1) zugeordnet wird.

Zur Beseitigung der Redundanz kann in für sich bekannter Art und Weise eine Maximalverhältniskombination MRC (Maximum Ratio Combining) oder eine so genannte Joined MIMO (Multiple Input Multiple Output) eingesetzt werden. So kann die Rekonstruktion beispielsweise durch drei Abgriffe vs erfolgen, welche im Abstand der Frequenzanzahl N die Daten des zweiten Frequenzbereichs f* abgreifen und den entsprechenden Datenwert im ersten Frequenzbereich f rekonstruieren. Vorzugsweise kann eine solche Rekonstruktion in einem Prozessor P durchgeführt werden, welcher auch zur sonstigen Datenverarbeitung in der empfängerseitigen Einrichtung eingesetzt wird. Letztendlich stehen so in einem zweiten dargestellten empfängerseitigen Verfahrensschritt e wieder Eingangswerte für eine inverse Fourier-Transformation, insbesondere inverse diskrete Fourier-Transformation IDFT bereit, um die Daten im Zeitbereich zurückzugewinnen.

Die Verfahrensweisen gemäß Fig. 1 und Fig. 2 sind somit eng an einer klassischen Realisierung des SC-FDMA-Konzeptes orientiert, wobei sie jedoch einen generischen DFT- und IDFT-Ansatz vorzugsweise in Verbindung mit einer spektralen Erweiterung und mit einer speziellen Trägerabbildung verwenden, um eine Übertragung bei jeglicher umsetzbarer Blockgröße ermöglichen zu können. Sofern eine zyklische Verschiebung stattfinden soll, kann eine effiziente Implementierung der DFT unter Verwendung eines zyklischen Algorithmus unter Ausnutzung eines gemeinsamen (engl.: Mutual) Primfaktors unter der Bezeichnung MPFCA durchgeführt werden, wie dies für sich genommen aus [10] bekannt ist. Praktisch umgesetzt ist eine 1200-Punkt DFT lediglich um einen Faktor von 4 oder mehr komplexer als eine ähnlich dimensionierte schnelle Fourier-Transformation mit 2048 Punkten.

Durchgeführt wird somit ein Abbildungs- und Rückabbildungsprozess in einer DFT-basierten SC-FDMA-Kette mit vorzugsweise einer spektralen Aufweitung bzw. Erweiterung. Skizziert sind in Fig. 1 und 2 Datenwerte x(1), ..., x(N) einer Zeitreihe eines vorbereitenden Datenschritts a0, welche mittels einer Fourier-Transformation in den Frequenzbereich umgesetzt werden, was anhand einer weiteren Darstellungszeile als erster Verfahrensschritt a skizziert ist. In einem nachfolgenden zweiten Verfahrensschritt erfolgt eine Abbildung der N Daten bzw. Datensignale auf einen größeren zweiten Frequenzbereich mit einer größeren Anzahl Nc von Subträgern bzw. Frequenzkanälen. Dabei kann eine spektrale Erweiterung in Verbindung mit insbesondere dem zweiten Verfahrensschritt c und vorzugsweise eine Filterung bzw. Multiplikation mit einem RRC-Spektrum (RRC: Route Raised Cosine) durchgeführt werden. Eine vorzugsweise zyklische Verschiebung erfolgt in einem nachfolgenden Verfahrensschritt, um zu den anhand des dritten Schritts d dargestellten Werten im Frequenzraum zu gelangen. Dabei werden die Werte bzw. Daten in das zum Senden zugewiesene Spektrum verlagert bzw. abgebildet.

In der empfängerseitigen Einrichtung RX wird das Signal des beispielsweise k-ten Teilnehmers als dem empfangenen übertragenen Signal aus dem Spektrum herausmaskiert. Im Falle einer redundanten Datenanordnung werden Signale auf den redundanten Subträgern unter Verwendung vorzugsweise des virtuellen Antennenkonzepts mit MRC oder gemeinsame MIMO-Signalverarbeitung rekonstruiert. Pro Datenstrom gegebenenfalls parallel zueinander übertragener Datenfolgen wird dann der resultierende Vektor der Länge N in die inverse diskrete Fourier-Transformation geführt. Umsetzbar ist eine solche Verfahrensweise insbesondere bei einer Übertragung gemäß OFDM, wo ein Signal im Zeitbereich übertragen wird, wobei pro Sende-Träger, Nutzer, bzw. Sendestation ein bestimmter Spektrumsanteil im Frequenzbereich zugewiesen wird.

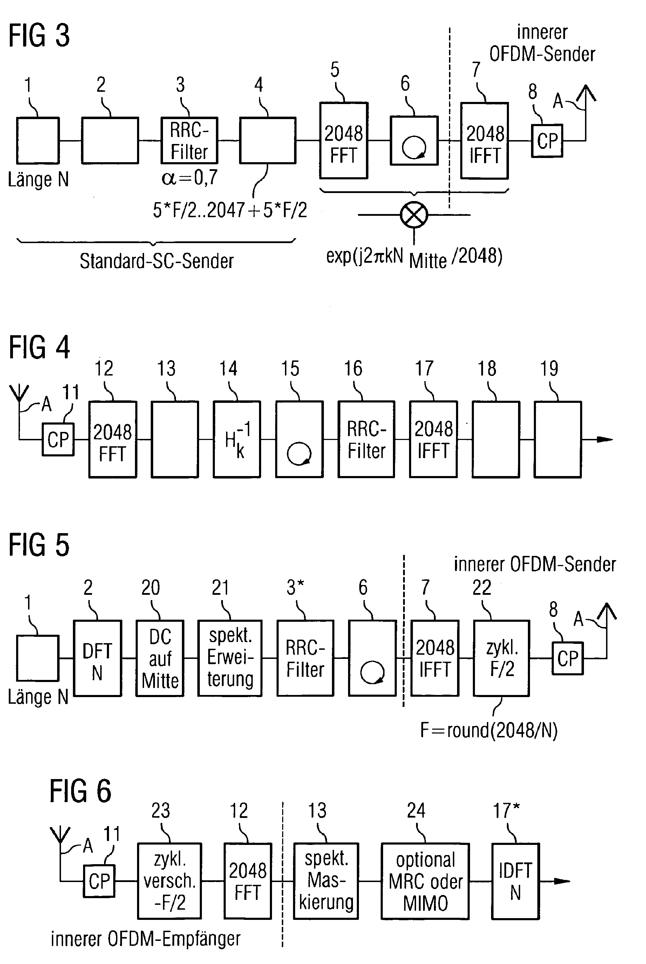

Anhand Fig. 3 ist ein erster beispielhafter Sender als eine senderseitige Einrichtung TX skizziert. Als Komponenten sind, wie auch in den weiteren Figuren, lediglich diejenigen Komponenten dargestellt sind, welche für das Verständnis des bevorzugten Verfahrensablaufs erforderlich sind. In üblicher Art und Weise kann deren Reihenfolge teilweise getauscht werden oder es können zusätzliche weitere Komponenten ergänzt werden. Unter einer Komponente sind verfahrenstechnische und/oder hardware-technische Elemente zu verstehen.

Dabei zeigt Fig. 3 einen beispielhaften klassischen SC-Sender, wobei eine Zeitbereichsfilterung verwendet werden kann, um SC-FDMA-Wellenformen zu erzeugen. Einleitend wird durch eine Burst-Quellen-Einheit 1 ein Burst bzw. eine Datenfolge mit einer Länge von N Datenwerten bereitgestellt. Es folgt in einem zweiten Block bzw. einer zweiten Einheit 2 ein Überabtasten, wobei die Anzahl der Abtastwerte um den Faktor F als Überabtastfaktor erhöht wird. Der Überabtastfaktor kann beispielsweise durch die für sich bekannte Funktion F = round(2048/N) ermittelt werden. In einem dritten Block 3 folgt eine RRC-Filterung mit einem beispielhaften Filter-Koeffizienten $\alpha = 0{,}7$. Nachfolgend wird die Sendeabfolge herausgenommen (engl.: stamp out), was in einem vierten Block 4 geschieht. Bei einer Abbildung gemäß 5*F/2...2047+5*F/2 liegt dabei die steigende Flanke des ersten zu verarbeitenden Symbols im Fall von 2500 Abtastwerten noch im gewünschten Zeitfenster. Dabei wird berücksichtigt, dass durch den RRC-Filter gemäß dem dritten Block 3 eine Verzögerung von 3F erfolgt. Bei diesen ersten vier Komponenten handelt es sich im Wesentlichen um einen Standard-Einzelträger-Sender (Single-Carrier-Transmitter).

Nachfolgend erfolgt in einem fünften Block 5 eine Fourier-Transformation mit einer Anzahl von Stützstellen gleich der Anzahl Nc der hoch- bzw. aufwärts-abgetasteten Stützstellen des zweiten Blocks 2. In einem sechsten Block folgt die Abbildung auf den gewünschten Frequenzbereich für die Übertragung. Vorzugsweise nimmt der sechste Block 6 dazu eine zyklische Verschiebung vor. Schließlich folgt in einem siebten Block 7 eine inverse schnelle Fourier-Transformation IFFT und letztendlich wird in einem achten Block 8 ein zyklischer Präfix CP angesetzt, indem beispielsweise die letzten 128 Abtastwerte zusätzlich vorne an die Datenfolge angesetzt werden. Die Blöcke 7 und 8 bilden einen inneren OFDM-Sender. Die Blöcke 5 bis 7 können dabei auch ausgedrückt werden durch die Funktion exp (j$2\pi N_{Mitte}$/2048).

Fig. 4 zeigt einen klassischen SC-FDMA-Empfänger mit einem Frequenzbereichsfilter, wobei dieser Empfänger als empfängerseitige Einrichtung RX zur Verarbeitung von übertragenen Daten ausgelegt ist, welche von einer Sendeanordnung gemäß Fig. 3 gesendet wurden.

Einleitend wird in einem inneren OFDM-Empfänger in einem ersten Block 11 der zyklische Präfix CP verarbeitet. Es folgt in einem zweiten Block 12 eine Fourier-Transformation, insbesondere eine schnelle Fourier-Transformation FFT mit der Anzahl der Stützstellen N, welche beim senderseitigen Verfahren verwendet wurden. In dem dritten empfängerseitigen Block 13 findet ein spektrales Ausmaskieren eines Teilnehmersignals des entsprechenden Teilnehmers k statt.

In einem vierten Block 14 erfolgt eine Entzerrung im Frequenzbereich. Nachfolgend wird eine Abbildung, insbesondere eine zyklische Verschiebung, in einem fünften empfängerseitigen Block 15 durchgeführt, bevor ein RRC-Filter zur Durchführung einer Mitten-Abtastung und Bereitstellung eines klassischen SC-Signals in einem sechsten empfängerseitigen Block 16 angewendet wird. In einem siebten empfängerseitigen Block wird wieder eine inverse schnelle Fourier-Transformation IFFT durchgeführt.

In einem achten empfängerseitigen Block findet ein Abwärts-Abtasten mit einem Abtastfaktor F statt, wobei eine Verzögerung berücksichtigt wird gemäß round(F/2). Das vom achten empfängerseitigen Block ausgegebene Signal bzw. die entsprechende Datenabfolge wird einem Detektor zugeführt.

Anhand der Fig. 5 und 6 sind eine senderseitige bzw. eine empfängerseitige Einrichtung in alternativer Ausgestaltung skizziert, wobei Blöcke mit gleichen Bezugszeichen für eine gleiche oder ähnliche Funktion bzw. für einen gleichen oder ähnlichen Aufbau wie bei den Anordnungen gemäß Fig. 3 und 4 stehen. Entsprechend werden im Wesentlichen nur Unterschiede beschrieben.

Fig. 5 betrifft einen DFT-basierten Sender. Für spektral erweiterte SC-FDMA-Signale werden optional sowohl eine spektrale Erweiterung als auch eine Frequenzbereichs-RRC-Filterung durchgeführt. In einem ersten Block 1 wird wieder ein Datenburst bereitgestellt, welcher einem zweiten Block 5* zur Durchführung einer diskreten Fourier-Transformation mit einer Länge entsprechend der Frequenzanzahl N des ersten Frequenzraums durchgeführt wird. In einem nachfolgenden dritten senderseitigen Block 20 wird ein Gleichanteil DC der Datenwerte auf den Mittenbereich abgebildet. In einem vierten senderseitigen Block findet optional eine spektrale Erweiterung statt. In einem fünften senderseitigen Block 3* findet im Frequenzbereich optional eine RRC-Filterung statt. Eine solche Filterung wird durchgeführt, da die Intensität der entsprechenden Datenwerte links und rechts vom Gleichanteil (DC) vorzugsweise abfallen soll. Insbesondere der dritte bis fünfte senderseitige Block 20, 21, 3* können auch untereinander in der Reihenfolge ausgetauscht werden. Berechnungen können insbesondere durch kommutative Matrixoperationen bzw. Matrizen-Multiplikationen durchgeführt werden.

In einem nachfolgenden sechsten Block 6 findet wieder eine zyklische Verschiebung als eine beispielhafte Abbildung statt. In einem siebten senderseitigen Block 7 wird wieder eine inverse schnelle Fourier-Transformation IFFT durchgeführt, deren Ausgangswerte einer zyklischen Verschiebung um die halbe Frequenzanzahl F/2 entspricht. Darstellbar ist dies durch die Gleichung bzw. Funktion F = round(2048/N) in einem Block 22. Letztendlich erfolgt das Anfügen des zyklischen Präfix in einem abschließenden Block 8. Die letzten drei Komponenten 7, 22, 8 bilden dabei einen inneren OFDM-Sender aus.

Empfängerseitig wird ein derart bereitgestelltes und übertragenes Signal gemäß Fig. 6 in einem IDFT-basierten Empfänger verarbeitet. Für spektral erweiterte SC-FDMA-Signale sind eine RRC-Filterung und eine spektrale Kombination optional vorgesehen.

Nach dem Anlegen der übertragenen und empfangenen Daten an einen ersten Block 11 zur Verarbeitung des zyklischen Präfix werden dessen Ausgangsdaten einer zyklischen Verschiebung um -F/2 in einem zweiten empfängerseitigen Block 23 unterzogen. Dessen Ausgangswerte werden einer schnellen Fourier-Transformation FFT in einem dritten empfängerseitigen Block 12 unterzogen. Diese drei ersten Blöcke bilden einen inneren OFDM-Empfänger.

In einem vierten empfängerseitigen Block 13 erfolgt wieder eine spektrale Ausmaskierung des Teilnehmersignals für den entsprechenden Teilnehmer. In einem fünften empfängerseitigen Block 24 erfolgt optional die MRC- oder Joint-MIMO-Verarbeitung der spektralen Kompression. Die Ausgangswerte dieses fünften empfängerseitigen Blocks 24 werden wiederum einer inversen diskreten Fourier-Transformation in einem abschließenden Block 17* mit einer Länge N entsprechend der ersten Frequenzanzahl N durchgeführt.

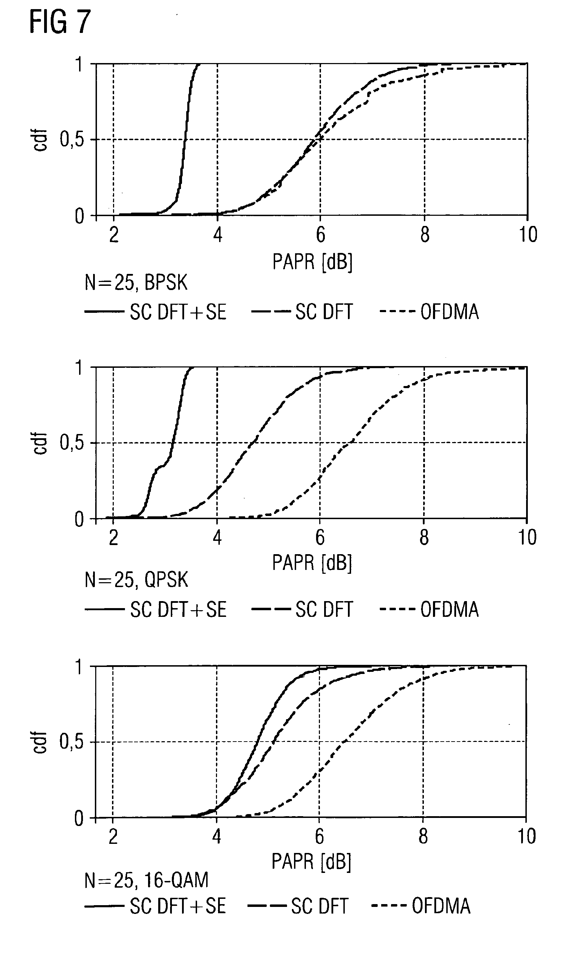

Der Hauptvorteil besteht darin, dass gemäß erster Versuche in dem hauptsächlichen Spitzenwert-zu-Durchschnittswert-Verhältnis (PAPR)eine Reduktion von zumindest bis zu 3 dB erzielt werden können, wobei dies zumindest für Modulationsschemata mit konstanter Amplitude, wie z.B. BPSK und QPSK gilt. Spektral effiziente Schemata mit Symbolkonstellationen die ungleiche Amplitude haben, beispielsweise 16-QAM und jenseits davon, zeigen keinen so großen Gewinn mehr. Dies ist beispielhaft anhand Fig. 7 skizziert, in welcher PAPR-Kurven für verschiedene Codierungsverfahren und verschiedene Übertragungsverfahren veranschaulicht sind. Der Preis für diese Gewinne liegt gemäß erster Untersuchungen für die übertragenen Signale in einer höher erforderlichen Bandbreite mit einem Faktor 5/4.

Möglich ist insbesondere auch die Empfänger so aufzubauen, dass die spektral erweiterte Version von SC-FDMA gemäß der vorliegend beschriebenen Verfahrensweise auch fortschrittliche Multi-Antennen-Techniken berücksichtigen können, was ausgenutzt werden kann, um die erforderliche Sendeleistung von tragbaren Einrichtungen weiter zu reduzieren. Diesbezüglich kann auf für sich bekannte virtuelle Antennenkonzepte gemäß z. B. [8] zurückgegriffen werden. Hierbei werden die bei der spektralen Erweiterung senderseitig redundant hinzugefügten Träger empfängerseitig als statistisch unabhängige Empfangssignale angesehen, die man auch als zusätzliche Empfangsantennen interpretieren kann. Dadurch kann man bekannte Mehrantennen-Signalverarbeitungsalgorithmen sinngemäß mit entsprechend erhöhter Anzahl virtueller Empfangsantennen einsetzen.

Letztendlich wird beispielhaft die Entwicklung beschrieben, welche zum Einschließen von MIMO bevorzugt wird. Dabei wird berücksichtigt, dass empfängerseitig empfangene Signale bzw. Datenfolgen auf Subträgern (n-M, n, n+M) redundante Informationen abhängig von dem einen und selben DFT-Ausgangssignal $x_n$ enthalten. Die empfangenen Signale können als virtuelle Antennensignale entsprechend den Ausführungen gemäß Fig. 6 betrachtet werden. Entsprechend können die Signale und Kanäle in Subvektoren

$$\mathbf{y}_j^n = \begin{pmatrix} y_j^{n-N} \\ y_j^n \\ y_j^{n+N} \end{pmatrix} \quad \mathbf{h}_{ij}^n = \begin{pmatrix} h_{ij}^{n-N} \\ h_{ij}^n \\ h_{ij}^{n+N} \end{pmatrix} \quad \mathbf{v}_j^n = \begin{pmatrix} v_j^{n-N} \\ v_j^n \\ v_j^{n+N} \end{pmatrix} \tag{1}$$

geschrieben werden, wobei diese Subvektoren gestapelt werden können gemäß

$$\tilde{\mathbf{y}}_n = \begin{pmatrix} \mathbf{y}_1^n \\ \vdots \\ \mathbf{y}_{N_{Rx}}^n \end{pmatrix} \quad \tilde{\mathbf{H}}_n = \begin{pmatrix} \mathbf{h}_{11}^n & \cdots & \mathbf{h}_{1N_{Tx}}^n \\ \vdots & \vdots & \vdots \\ \mathbf{h}_{N_{Rx}1}^n & \cdots & \mathbf{h}_{N_{Rx}N_{Tx}}^n \end{pmatrix} \quad \tilde{\mathbf{v}}_n = \begin{pmatrix} \mathbf{v}_1^n \\ \vdots \\ \mathbf{v}_{N_{Rx}}^n \end{pmatrix}. \tag{2}$$

Daher erhält man für jeden Subträger die $3N_{Rx}$x1-Vektoren der empfangenen Signale $\tilde{y}_n$ und Rauschen $\tilde{\mathbf{v}}_n$. Eine entsprechend gebildete $3N_{RX}$x$N_{TX}$-Kanalmatrix $H_n$ und ein $N_{Tx}$x1-Vektor für das übertragene Signal $X_n$ werden ebenfalls erhalten, wobei $N_{Tx}$ und $N_{Rx}$ die Anzahlen von Antennen beim Sender bzw. Empfänger sind. Die Übertragungsgleichung wird gegeben durch

$$\tilde{\mathbf{y}}_n = \tilde{\mathbf{H}}_n \cdot \tilde{\mathbf{x}}_n + \tilde{\mathbf{v}}_n. \tag{3}$$

Dies ist ein klassisches MIMO-Problem für jedes Ausgangssignal der DFT bei dem Sender. In einfachen Empfängern kann man einen Minimum-Mean-Square-Error-(MMSE)-MIMO-Detektor verwenden, um die räumlich multiplexten Signale zu separieren. Eine optimale Detektion wird die diskrete Natur des Kodeworts am DFT-Eingang ausnutzen. Das Empfänger-Design beruht dann auf der Schätzung der wahrscheinlichsten Sendefolge (MLSE: Maximum-Likelihood-Sequence-Estimation) nach dem Prinzip des kleinsten quadratischen Abstands, und die optimale Signalverarbeitung ist ähnlich zum MIMO RAKE für MC-CDMA, was für sich genommen aus [9] H. Chen, V. Jungnickel, V. Pohl, C. von Helmolt, "A multicode space-frequency RAKE receiver," in: Proc. 38th Asilomar Conference on "http://ieeex-

**EP 1 936 900 A1**

plore.ieee.org/xpl/RecentCon.jsp?punumber=9626", Vol. 1, Page(s):672 - 676, 2004, bekannt ist.

Literaturverzeichnis

[1] J.-P. Javaudin, C. Dubuc, D. Lacroix, M. Earnshaw, "An OFDM evolution for the UMTS high speed downlink packet access," in Proc. IEEE "http://ieeexplore.ieee.org/xpl/RecentCon.jsp?punumber=9 623", Vol. 2, pp. 846-850, 2004.

[2] J. Tubbax, B. Come, L. Van der Perre, L. Deneire, S. Donnay, M. Engels, "OFDM versus Single Carrier with Cyclic Prefix: A system-based comparison," in Proc. IEEE "http://ieeexplore.ieee.org/xpl/RecentCon.jsp?punumber=7 588", Vol. 2, pp. 1115-1119, 2001.

[3] C. Desset, B. Côme, B. Debaillie, J. Driessche, J. Tubbax, W. Eberle, J.W. Weijers, "Constant Envelope Modulation Techniques for Non-LinearFront-Ends," verfügbar über: "http://www.imec.be/pacwoman/", Deliverables/WP4/WP4.2-IMEC-D4.2.1_constant_enveloppe_technique es-12-01-2004-V1.0.doc.

[4] A. Goldsmith, P. Varaiya, "Capacity of fading channels with channel side information," IEEE Trans. Inf. Theory, Vol. 43, No. 6, Nov. 1997.

[5] 3GPP TR 25.814 V7.0.0 (2006-06), verfügbar über: "http://www.3gpp.org".

[6] K. Gentile, "The care and feeding of digital, pulse-shaping filters," verfügbar über: "http://www.rfdesign.com".

[7] H.G. Myung, J. Lim, D. J. Goodman, " Peak-to-average power ratio of single carrier FDMA signals with pulse shaping," Proc. IEEE PIMRC, 11-14 Sep. 2006, Helsinki, Finland.

[8] D. Samardzija, P. Wolniansky, J. Ling, "Performance evaluation of the VBLAST algorithm in W-CDMA systems," in Proc. IEEE Vehicular Technology Conference, "http://ieeexplore.ieee.org/xpl/RecentCon.jsp?punumber=7 588", Vol. 2, pp. 723-727, 2001.

[9] H. Chen, V. Jungnickel, V. Pohl, C. von Helmolt, "A multicode space-frequency RAKE receiver," in: Proc. 38th Asilomar Conference on "http://ieeexplore.ieee.org/xpl/RecentCon.jsp?punumber=9 626", Vol. 1, Page(s):672 - 676, 2004.

[10] S.D. Morgera, "Efficient synthesis and implementation of large discrete Fourier transforms," SIAM Journal Comput., Vol. 9, No. 2, pp. 251-272, 1980.

**Patentansprüche**

1. Verfahren zur SC-FDMA-Datenübertragung, bei dem

- eine Abfolge von Eingangsdaten ($x(i)$, i = 1, 2, 3, ..., N) insbesondere mittels eines Modulators in eine Folge von Datensignalen gewandelt und in einer diskreten Transformation (DFT; FFT) als transformierte Datensignale ($y(i)$, i = 1, 2, 3, ..., N) auf erste Frequenzkanäle ($f(1)$, $f(2)$, $f(3)$, ..., $f(N)$) in einen ersten Frequenzraum auf eine erste Frequenzanzahl (N) transformiert wird,
- die transformierten Datensignale ($y(i)$) auf zweite Frequenzkanäle ($f(1)^*$, $f(2)^*$, $f(3)^*$, ..., $f(N)^*$, ..., $f(Nc)^*$) in einem zweiten Frequenzraum mit einer größeren zweiten Frequenzanzahl (Nc) abgebildet werden,
- die transformierten Datensignale auf den zweiten Frequenzkanälen ($f(1)^*$, $f(2)^*$, $f(3)^*$, ..., $f(N)^*$, ..., $f(Nc)^*$) mittels einer Rücktransformation (IFFT) rücktransformiert werden und
- derart rücktransformierte Datensignale ($z(i)$) zur Übertragung bereitgestellt werden,

**dadurch gekennzeichnet, dass**

- die transformierten Datensignale ($y(i)$) in einen Frequenzbereich ($f(i+1)^*$, ..., $f(i+N)^*$) der zweiten Frequenzkanäle ($f(1)^*$, $f(2)^*$, $f(3)^*$, ..., $f(N)^*$, ..., $f(Nc)^*$) derart abgebildet werden, dass ein Gleichanteil ($y(1)$ bei $f(1)$) der transformierten Datensignale ($y(i)$) mittig innerhalb des Frequenzbereichs ($f(i+1)^*$, ..., $f(i+N)^*$) abgebildet wird.

2. Verfahren nach Anspruch 1, bei dem der Frequenzbereich ($f(i+1)^*$, ..., $f(i+N)^*$) der zweiten Frequenzkanäle ($f(1)^*$, $f(2)^*$, $f(3)^*$, ..., $f(N)^*$, ..., $f(Nc)^*$) durch eine insbesondere direkt aufeinanderfolgende Anzahl der zweiten Frequenzkanäle ($f(i+1)^*$, ..., $f(i+N)^*$) gleich der ersten Frequenzanzahl (N) der transformierten Datensignale ($y(i)$) gebildet wird.

3. Verfahren nach Anspruch 1 oder 2, bei dem die transformierten Datensignale ($y(i)$) auf zueinander insbesondere direkt benachbarte Frequenzkanäle ($f(i+1)^*$, ..., $f(i+N)^*$) der zweiten Frequenzkanäle ($f(1)^*$, $f(2)^*$, $f(3)^*$, ..., $f(N)^*$, ..., $f(Nc)^*$) abgebildet werden.

4. Verfahren nach einem vorstehenden Anspruch, bei dem die transformierten Datensignale (y(i)) zyklisch verschoben abgebildet in den Frequenzbereich (f(i+1)*, ..., f(i+N)*) der zweiten Frequenzkanäle (f(1)*, f(2)*, f(3)*, ..., f(N)*, ..., f(Nc)*) abgebildet werden.

5. Verfahren nach einem vorstehenden Anspruch, bei dem eine erste Hälfte der transformierten Datensignale (y(i), i = 1, 2, ..., N/2) einschließlich dem Gleichanteil (y1) in dem Frequenzbereich (f(i+1)*, ..., f(i+N)*) der zweiten Frequenzkanäle (f(1)*, f(2)*, f(3)*, ..., f(N)*, ..., f(Nc)*) einer zweiten Hälfte der transformierten Datensignale (y(i), i = N/2, ..., N) nachfolgend abgebildet wird.

6. Verfahren nach Anspruch 5, bei dem die erste Hälfte der transformierten Datensignale (y(i), i = 1, 2, ..., N/2) einschließlich dem Gleichanteil (y(1)) auf die ersten der zweiten Frequenzkanäle (f(1)*, f(2)*,..., f(N/2)*) und die zweiten Hälfte der transformierten Datensignale (y(i), i = N/2, ..., N) auf die letzten der zweiten Frequenzkanäle (f(N-N/2)*, ..., f(Nc)*) abgebildet wird und nachfolgend eine zyklische Verschiebung auf den Frequenzbereich (f(i+1)*, ..., f(i+N)*) durchgeführt wird.

7. Verfahren nach einem vorstehenden Anspruch, bei dem die transformierten Datensignale (y(i), i = 1, 2, ..., N/2) zur Abbildung in den Frequenzbereich (f(i+1)*, ..., f(i+N)*, f(i+N+1)*, ..., F(i+2N)*) der zweiten Frequenzkanäle (f(1)*, f(2)*, f(3)*, ..., f(N)*, ..., f(Nc)*) derart spektral aufgeweitet werden durch eine periodische Wiederverwendung der transformierten Datensignale, dass im zweiten Frequenzraum eine Redundanz entsteht.

8. Verfahren nach Anspruch 7, bei dem beim Erweitern die transformierten Datensignale (y(i), i = 1, 2, ..., N/2) als ein erster Block (A) in den Frequenzbereich (f(i+1)*, ..., f(i+N)*) der zweiten Frequenzkanäle (f(1)*, f(2)*, f(3)*, ..., f(N)*, ..., f(Nc)*) abgebildet werden und die transformierten Datensignale (y(i), i = 1, 2, ..., N/2) als ein weiterer Block (B) redundant hinter dem ersten Block (A) in den Frequenzbereich (f(i+N+1)*, ..., F(i+2N)*) der zweiten Frequenzkanäle (f(1)*, f(2)*, f(3)*, ..., f(N)*, ..., f(Nc)*) abgebildet werden, wobei der Gleichanteil (y(1)) im Übergangsbereich der beiden Blöcke (A, B) abgebildet wird.

9. Verfahren nach einem vorstehenden Anspruch, bei dem im Frequenzbereich eine Filterung durchgeführt wird.

10. Verfahren zum Verarbeiten gemäß einem Verfahren nach einem vorstehenden Anspruch übertragener Daten, bei dem die übertragenen Datensignale (z(i)) mittels einer Transformation (FFT) in den Frequenzbereich transformiert, mittels umgekehrter Verfahrensweise auf erste Frequenzkanäle (f(1), f(2), f(3), ..., f(N)) eines ersten Frequenzraums auf die erste Frequenzanzahl (N) abgebildet und mittels einer Rücktransformation (IFFT) rücktransformiert werden.

11. Verfahren nach einem vorstehenden Anspruch, bei dem für die Transformation und die Rücktransformation eine Fourier-transformation, insbesondere eine diskrete oder schnelle Fouriertransformation (DFT; FFT) verwendet wird.

12. Verfahren nach einem vorstehenden Anspruch, bei dem die zu übertragenden Datensignale mit einem Modulationsverfahren mit konstanter Amplitude, z.B. BPSK oder QPSK, übertragen werden.

13. OFDM-Vorrichtung mit einer Steuereinrichtung oder Komponenten, die ausgestaltet und/oder gesteuert sind zum Durchführen eines Verfahrens nach einem vorstehenden Anspruch.

# FIG 1

$x(1)$    $x(N)$

(a0)

$t(1)$    $t(N)$

DC   $y(1)$   $y(N/2)$   $y(N)$    DFT

(a)   A   B    = DFT-Ausgangswerte zu Zeitpunkt tx

$f(1)$ $f(N/2)$   $f(N)$

$y(1)$   $y(N/2-1)$        $y(N/2)$   $y(N)$

(b)   A                    B   $f^*$

$f(1)^*$ $f(N/2-1)^*$         $f(N/2)^*$   $f(Nc)^*$

$y(N/2)$ $y(N)$ $y(1)$ $y(2)$ $y(N/2-1)$

(d)               B   A                   $f^*$

$f(1)^*$   $f(i+1)^*$ $f(i+N/2)^*$   $f(i+N)^*$      IFFT   $f(Nc)^*$

TX                                              A

DC   $y(1)$ $y(N/2)$   $y(N)$   = IDFT-Eingangswerte in Rx

(e)   A   B                                          V

RX   $f(1)$ $f(N/2)$   $f(N)$                        A

# FIG 2

## FIG 3

innerer OFDM-Sender

1 2 3 RRC-Filter $\alpha=0{,}7$ 4 5 2048 FFT 6 7 2048 IFFT 8 CP A

Länge N

$5*F/2..2047+5*F/2$

Standard-SC-Sender

$\exp(j2\pi k N_{\text{Mitte}}/2048)$

## FIG 4

A 11 CP 12 2048 FFT 13 14 $H_k^{-1}$ 15 16 RRC-Filter 17 2048 IFFT 18 19

## FIG 5

innerer OFDM-Sender

1 Länge N 2 DFT N 20 DC auf Mitte 21 spekt. Erweiterung 3* RRC-Filter 6 7 2048 IFFT 22 zykl. F/2 8 CP A

$F=\text{round}(2048/N)$

## FIG 6

A 11 CP 23 zykl. versch. -F/2 12 2048 FFT 13 spekt. Maskierung 24 optional MRC oder MIMO 17* IDFT N

innerer OFDM-Empfänger

# FIG 7

N=25, BPSK

——— SC DFT+SE   — — SC DFT   ---- OFDMA

N=25, QPSK

——— SC DFT+SE   — — SC DFT   ---- OFDMA

N=25, 16-QAM

——— SC DFT+SE   — — SC DFT   ---- OFDMA

**Europäisches Patentamt**

# EUROPÄISCHER RECHERCHENBERICHT

Nummer der Anmeldung

EP 06 02 6229

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MYUNG H G ET AL: "SINGLE CARRIER FDMA FOR UPLINK WIRELESS TRANSMISSION" IEEE VEHICULAR TECHNOLOGY MAGAZINE, IEEE,, US, Bd. 1, Nr. 3, September 2006 (2006-09), Seiten 30-38, XP001249128 ISSN: 1556-6072 * Seite 32 - Seite 33 * | 1-13 | INV. H04L27/26 |
| A | "SC-FDMA (FDD / ÄTDDÜ)" 3RD GENERATION PARTNERSHIP PROJECT (3GPP); TECHNICAL REPORT (TR), XX, XX, Bd. VO.3.1, Oktober 2005 (2005-10), Seiten 29-37, XP003002200 * das ganze Dokument * | 1-13 | |
| A | RITT, CATT, SHRCWC: "Offset DFT-Spread OFDM with Generalized Raised-Cosine Filters for Pulse Shaping" 3GPP TSG-RAN WG1 #44 MEETING, - 17. Februar 2006 (2006-02-17) XP002434731 Gefunden im Internet: URL:http://www.3gpp.org/ftp/Specs/html-inf o/TDocExMtg--R1-44--25406.htm> * das ganze Dokument * | 1-13 | **RECHERCHIERTE SACHGEBIETE (IPC)** H04L |
| A | HUAWEI: "Optimum family of spectrum-shaping functions for PAPR reduction in SC-FDMA" 3GPP TSG RAN WG1 43, - 11. November 2005 (2005-11-11) XP002434732 Gefunden im Internet: URL:http://www.3gpp.org/ftp/tsg_ran/WG1_RL 1/TSGR1_43/Docs/> * das ganze Dokument * | 1-13 | |

-/--

Der vorliegende Recherchenbericht wurde für alle Patentansprüche erstellt

| Recherchenort | Abschlußdatum der Recherche | Prüfer |
|---|---|---|
| München | 23. Mai 2007 | MARTINEZ MARTINEZ, V |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

............................................................................

& : Mitglied der gleichen Patentfamilie, übereinstimmendes
    Dokument

EPO FORM 1503 03.82 (P04C03)

**EP 1 936 900 A1**

**Europäisches Patentamt**

## EUROPÄISCHER RECHERCHENBERICHT

Nummer der Anmeldung

EP 06 02 6229

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | ALCATEL: "Effect of different ST/SF Coding and Mapping schemes on the PAPR of the SC-FDMA in E-UTRA Uplink" 3GPP TSG RAN WG1 45, - 12. Mai 2006 (2006-05-12) XP002434733 Gefunden im Internet: URL:http://www.3gpp.org/ftp/tsg_ran/WG1_RL1/TSGR1_45/Docs/> * das ganze Dokument * ----- | 1-13 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 23. Mai 2007 | MARTINEZ MARTINEZ, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................................
& : Mitglied der gleichen Patentfamilie, übereinstimmendes Dokument

EPO FORM 1503 03.82 (P04C03)

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J.-P. JAVAUDIN ; C. DUBUC ; D. LACROIX ; M. EARNSHAW.** An OFDM evolution for the UMTS high speed downlink packet access. *Proc. IEEE,* 2004, vol. 2, 846-850, http://ieeexplore.ieee.org/xpl/RecentCon.jsp?punumber=9623
- **J. TUBBAX ; B. COME ; L. VAN DER PERRE ; L. DENEIRE ; S. DONNAY ; M. ENGELS.** OFDM versus Single Carrier with Cyclic Prefix: A system-based comparison. *Proc. IEEE,* 2001, vol. 2, 1115-1119, http://ieeexplore.ieee.org/xpl/RecentCon.jsp?punumber=7588
- **C. DESSET ; B. CÔME ; B. DEBAILLIE ; J. DRIESSCHE ; J. TUBBAX ; W. EBERLE ; J.W. WEIJERS.** *Constant Envelope Modulation Techniques for Non-Linear Front-Ends, http://www.imec.be/pacwoman*
- **A. GOLDSMITH ; P. VARAIYA.** Capacity of fading channels with channel side information. *IEEE Trans. Inf. Theory,* November 1997, vol. 43 (6
- **D. SAMARDZIJA ; P. WOLNIANSKY ; J. LING.** Performance evaluation of the VBLAST algorithm in W-CDMA systems. *Proc. IEEE Vehicular Technology Conference,* 2001, vol. 2, 723-727, http://ieeexplore.ieee.org/xpl/RecentCon.jsp?punumber=7588
- **S.D. MORGERA.** Efficient synthesis and implementation of large discrete Fourier transforms. *SIAM Journal Comput.,* 1980, vol. 9 (2), 251-272
- **K. GENTILE.** *The care and feeding of digital, pulse-shaping filters, http://www.rfdesign.com*
- **H.G. MYUNG ; J. LIM ; D. J. GOODMAN.** Peak-to-average power ratio of single carrier FDMA signals with pulse shaping. *Proc. IEEE PIMRC,* 11. September 2006

- **H. CHEN ; V. JUNGNICKEL ; V. POHL ; C. VON HELMOLT.** A multicode space-frequency RAKE receiver. *Proc. 38th Asilomar Conference,* 2004, vol. 1, 672-676, http://ieeexplore.ieee.org/xpl/RecentCon.jsp?punumber=9626
- **J.-P. JAVAUDIN ; C. DUBUC ; D. LACROIX ; M. EARNSHAW.** An OFDM evolution for the UMTS high speed downlink packet access. *Proc. IEEE,* 2004, vol. 2, 846-850, http://ieeexplore.ieee.org/xpl/RecentCon.jsp?punumber=9 623
- **J. TUBBAX ; B. COME ; L. VAN DER PERRE ; L. DENEIRE ; S. DONNAY ; M. ENGELS.** OFDM versus Single Carrier with Cyclic Prefix: A system-based comparison. *Proc. IEEE,* 2001, vol. 2, 1115-1119, http://ieeexplore.ieee.org/xpl/RecentCon.jsp?punumber=7 588
- **C. DESSET ; B. CÔME ; B. DEBAILLIE ; J. DRIESSCHE ; J. TUBBAX ; W. EBERLE ; J.W. WEIJERS.** *Constant Envelope Modulation Techniques for Non-LinearFront-Ends, http://www.imec.be/pacwoman*
- *3GPP TR 25.814 V7.0.0 (2006-06, http://www.3gpp.org*
- **D. SAMARDZIJA ; P. WOLNIANSKY ; J. LING.** Performance evaluation of the VBLAST algorithm in W-CDMA systems. *Proc. IEEE Vehicular Technology Conference,* 2001, vol. 2, 723-727, http://ieeexplore.ieee.org/xpl/RecentCon.jsp?punumber=7 588
- **H. CHEN ; V. JUNGNICKEL ; V. POHL ; C. VON HELMOLT.** A multicode space-frequency RAKE receiver. *Proc. 38th Asilomar Conference,* 2004, vol. 1, 672-676, http://ieeexplore.ieee.org/xpl/RecentCon.jsp?punumber=9 626